(19) Europäisches Patentamt
European Patent Office
Office européen des brevets

(11) **EP 2 251 177 A2**

(12) **EUROPEAN PATENT APPLICATION**

(43) Date of publication:
**17.11.2010 Bulletin 2010/46**

(51) Int Cl.:
***B29C 47/08*** (2006.01)    ***B29C 47/30*** (2006.01)

(21) Application number: **10162609.1**

(22) Date of filing: **12.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **13.05.2009 JP 2009116676**

(71) Applicant: **The Japan Steel Works, Ltd.
Tokyo 141-0032 (JP)**

(72) Inventors:
 • **Tomiyama, Hideki
  Hiroshima-shi Hiroshima (JP)**
 • **Kodate, Kazuhiro
  Hiroshima-shi Hiroshima (JP)**
 • **Sumida, Katumi
  Hiroshima-shi Hiroshima (JP)**

(74) Representative: **Grünecker, Kinkeldey,
Stockmair & Schwanhäusser
Anwaltssozietät
Leopoldstrasse 4
80802 München (DE)**

(54) **Die Supporting Device and Die for Extrusion Molding Having Die Supporting Device**

(57)    A die supporting device (1) is attachable to an end of an extruder to extrude and mold a molten resin. The die supporting device (1) includes a passage (4) including an inlet port (2) and an outlet port (3). The molten resin is supplied from the extruder to the inlet port (2), and the molten resin supplied from the inlet port (2) is discharged from the outlet port (3). In the passage (4), a width (W) of the passage vertical to a flowing direction of the molten resin is enlarged from the inlet port (2) to the outlet port (3), and a height (h) of the passage vertical to the flowing direction is reduced from the inlet port (2) to the outlet port (3). In a sectional structure of the passage (4), a height ($h_4$) of the passage in end parts (6) in a direction of the width of the passage is larger than a height ($h_3$) of the passage in a central part (5) in the direction of the width of the passage.

*FIG. 1*

**Description**

BACKGROUND OF THE INVENTION

1. Field of the Invention

The present invention relates to a strand die supporting device used for a pellet producing process employing an extruder and a die for extrusion molding using the strand die supporting device.

2. Description of the Related Art

In a process for forming a strand by plastic or rubber and cutting the strand by a cutter to produce pellets, a strand die is used at an end of an extruder. In an arrangement of nozzle holes at an outlet of the strand die, the nozzle holes are ordinarily arranged in one row or several rows in a transverse direction or show an elliptic shape and generally show a shape wide in the transverse direction. When a molten material extruded from the strand die forms the strand, flow velocity at both end parts is lower than that of a central part due to the wide shape. Finally, inconvenient cases frequently arise that the uniformity of the sizes of the pellets cannot be maintained or the strand is cut.

An unevenness in flow velocity in the direction of the width appears more outstandingly in a fluid whose viscosity is low than in a fluid whose viscosity is high, and in a die whose width is narrow than in a die whose width is wide. For instance, when a resin high in its MFR (Melt Flow Rate) is produced with a high capability, since the wide die is used, the die needs to be designed so as to obtain a uniform flow velocity at the exit of the die.

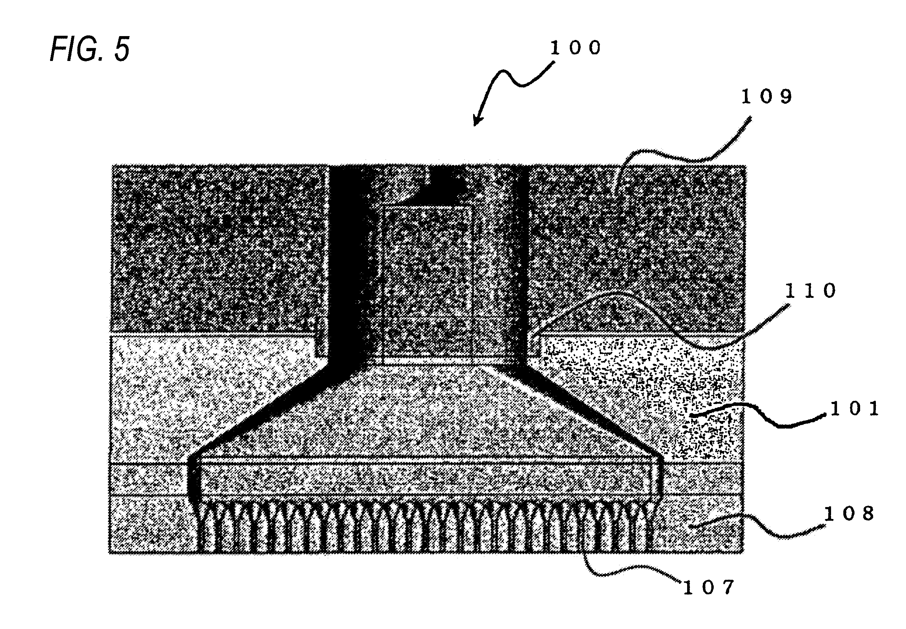

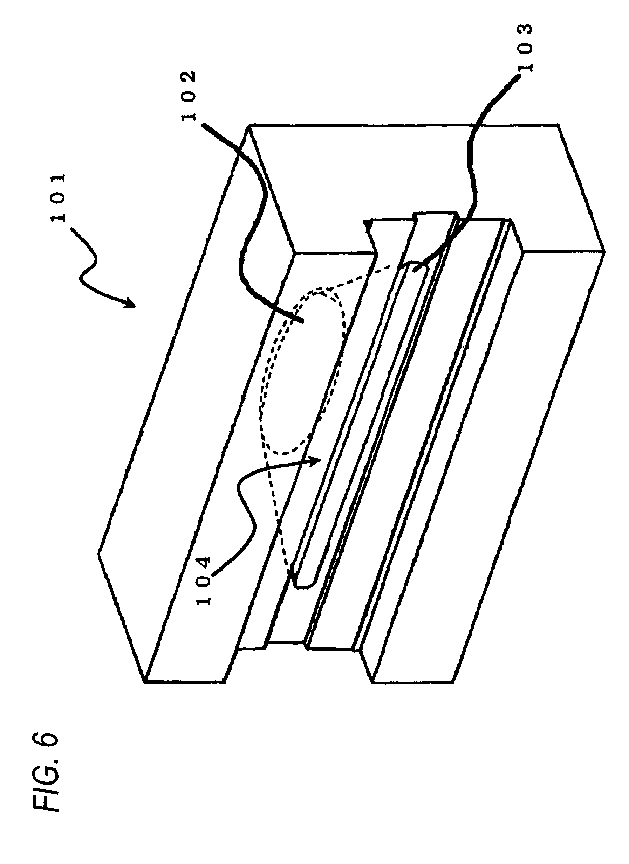

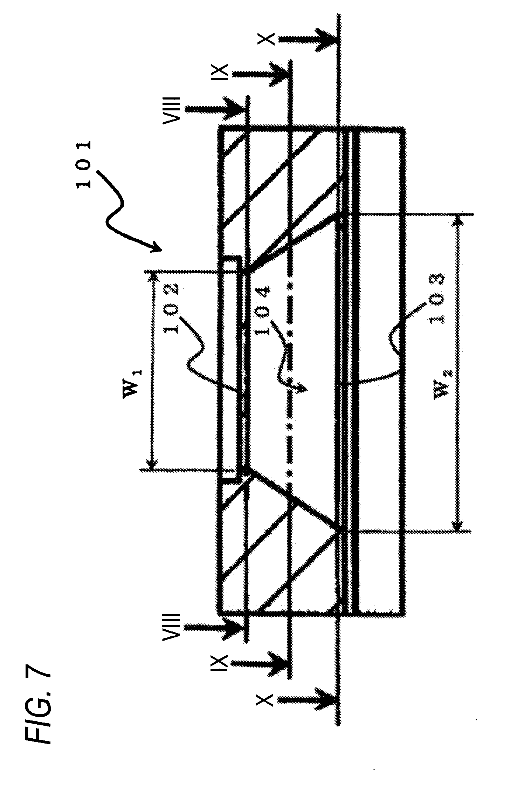

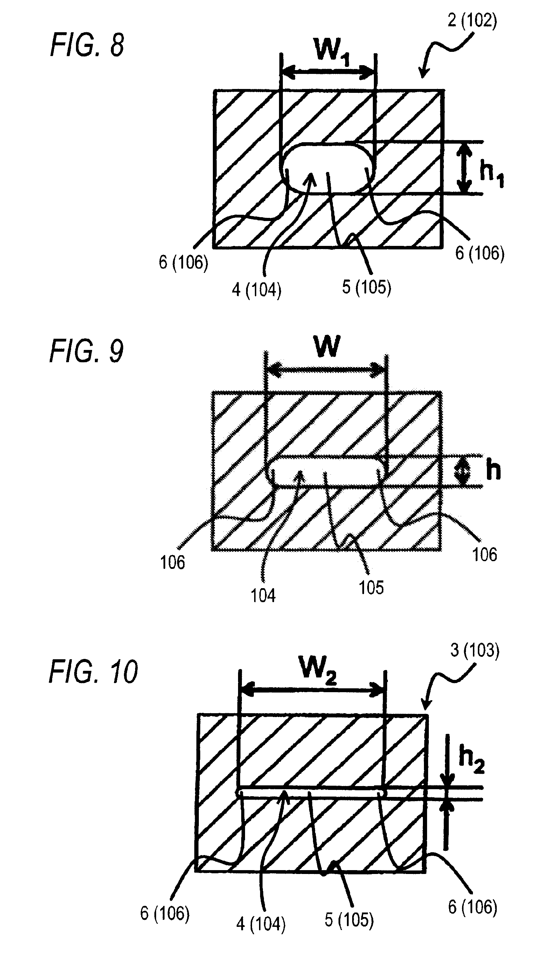

Fig. 5 shows a structural view of an ordinary strand die. Further, Fig. 6 shows a perspective view seen from the direction of the exit of a passage of the strand die shown in Fig. 5. Fig. 7 shows a sectional view of the passage. Figs. 8 to 10 respectively show a sectional view of an entrance of a typical die holder, a sectional view in a central part of a flow direction and a sectional view of the exit.

A die 100 for an extrusion molding includes a die holder 101 and a die plate 108 having a nozzle 107 for discharging a molten resin supplied from the die holder 101 in a form of a strand. The die holder 101 is attached to an end of an extruder through a connecting piping 109 and a breaker 110. To an end part of the die holder 101, the die plate 108 having the multi-hole nozzle 107 is attached and the strand shaped molten resin is extruded from an end of the die plate 108. Ordinarily, the sectional shape of an inlet port 102 of the die holder forming an entrance part of a passage 104 is preferably circular or elliptical. On the other hand, since in the sectional shape of an outlet port 103 of the die holder forming an exit part of the passage 104, a dimension of height h of the passage is smaller than that of the inlet port 102 and a dimension of width W is larger than that of the inlet port, an aspect ratio W/h thereof is larger than that of the entrance part. Further, ordinarily, since a shape of a main body of the die holder has a unitary block structure, when the passage 104 is worked, a limitation arises to some degree due to its workability. Therefore, many passages 104 of related-art die holders have such shapes as to linearly change the aspect ratios W/h from the sections of the inlet ports 102 to the sections of the outlet ports 103 as shown in Figs. 7 to 10. In the case of an ordinary producing device except a small device for an experiment, a ratio of a width $W_2$ of a passage in a section of an outlet port 103 to a width $W_1$ of a passage in a section of an inlet port 102 is expressed by $W_2/W_1 > 1$. When such a configuration of the passage is employed, a flow velocity in a central part 105 is higher than a flow velocity at both end parts 106 in the direction of the width of the passage 104.

JP-A-2004-268274 or JP-A-2006-1015 proposes a known technique in order to make a flow velocity distribution uniform in the direction of the width of a passage in an exit of a die.

JP-A-2004-268274 discloses a technique for applying a tapering work to more shorten the length of a land between nozzle holes in an end part than that in a central part in the die the number of the nozzle holes of which is 30 or more for one row at an exit of the die. On the other hand, JP-A-2006-1015 discloses a technique for gradually shortening the length of a land between nozzle holes from a central part to an end part when an angle for expanding a passage in a die holder is a prescribed value or larger. Further, in JP-A-2004-268274 and JP-A-2006-1015, when the passage is deformed to be thinner and wider in the die holder, since a flow velocity is higher in the central part than in the end part, a technique is disclosed for changing a fluid resistance at an outlet port and finally generating a uniform flow in the direction of the width. Further, JP-A-2004-268274 and JP-A-2006-1015 also disclose a technique for intentionally changing a pressure loss in the direction of the width in each hole of a die plate at the end of the die to make uniform a flow velocity distribution in the direction of the width of the passage arising in an entrance part of the die plate in an exit part of the die plate.

However, a discharge port of a nozzle in the die plate corresponding to an exit part of the die is an area where a shear rate is high. Further, in a plastic fluid showing a non-Newtonian property, a viscosity is greatly changed depending on the shear rate. Therefore, when pellets are produced from a material showing various viscous characteristics in such a die, it is difficult to ensure the uniformity of a flow rate in the direction of the width of the passage in a section of the exit part of the die.

SUMMARY OF THE INVENTION

The present invention is devised by considering the above-described circumstances and it is an object to provide a die supporting device and a die for extrusion molding having the die supporting device that can realize the uniformity of a flow rate in the direction of the width of a passage in a section of an exit part of a die located in the downstream side of the die supporting device.

In order to obtain more stable flow rate uniformity in a discharge port of a nozzle in an exit part of a die plate, a flow rate may be previously made to be uniform in an outlet port of a die holder as an entrance part of the die plate. Namely, a passage structure may be effectively realized in which the flow rate in the direction of the width of a passage is made to be uniform in the die holder located in an upstream side of the die plate.

Therefore, a die supporting device according to one aspect of the present invention is a die supporting device, which is attachable to an end of an extruder, and which extrudes and molds a molten resin, the die supporting device comprising: a passage comprising: an inlet port, to which the molten resin is supplied from the extruder; and an outlet port, from which the molten resin supplied from the inlet port is discharged, wherein a width of the passage vertical to a flowing direction of the molten resin is enlarged from the inlet port to the outlet port, and a height of the passage vertical to the flowing direction is reduced from the inlet port to the outlet port, and wherein in a sectional structure of the passage, a height of the passage in end parts in a direction of the width of the passage is larger than a height of the passage in a central part (5) in the direction of the width of the passage.

Further, a die for extrusion molding according to one aspect of the present invention comprises: the above-described die supporting device; and a die plate having nozzle holes that discharge the molten resin discharged from the die supporting device in a form of a strand.

The die supporting device according to the present invention includes a passage. In this passage, the width of the passage vertical to a flowing direction of a molten resin is enlarged from an inlet port to which the molten resin is supplied from an extruder to an outlet port and the height of the passage vertical to the flowing direction is reduced from the inlet port to the outlet port. In a sectional structure between the inlet port and the outlet port of the passage, the height of the passage in both end parts in the direction of the width of the passage is larger than the height of the passage in a central part in the direction of the width of the passage. A flow velocity in both the end parts in the direction of the width of the passage in this area is still lower than the flow velocity in the central part. However, since the height of the passage at both the end parts is larger than the height of the passage in the central part, the sectional area of the passage is larger in both the end parts than that in the central part. Thus, since the flow rate is proportional to the product of the flow velocity and the sectional area of the passage in accordance with a definition thereof, the difference of the flow rate between the central part and both the end parts can be suppressed more than that in a related-art passage configuration in which the sectional area of the passage in both end parts is not enlarged. Therefore, the flow rate can be made to be uniform between the central part and both the end parts in the direction of the width of the passage. Accordingly, in the die supporting device located in the upstream side of the die plate, the flow rate in the direction of the width of the passage can be previously made to be uniform.

Thus, the die supporting device and the die for extrusion molding having the die supporting device can be provided that can realize the uniformity of the flow rate in the direction of the width of the passage in a section of the exit part of the die located in the downstream side of the die supporting device.

BRIEF DESCRIPTION OF THE DRAWINGS

Fig. 1 is a perspective view showing a die supporting device according to one exemplary embodiment of the present invention;
Fig. 2 is a plan view of the supporting device shown in Fig. 1;
Fig. 3 is a sectional view taken along a line III-III corresponding to a central part of a flowing direction of a passage of the die supporting device shown in Fig. 2;
Fig. 4 is a graph showing a comparison between a flow rate distribution in an exit part of a die in a related-art die supporting device and a flow rate distribution in an exit part of a die in the die supporting device according to the one exemplary embodiment of the present invention;
Fig. 5 is a plan view showing the structure of an ordinary strand die;
Fig. 6 is a perspective view seen from the direction of an exit part of a passage of the strand die shown in Fig. 5;
Fig. 7 is a plan view of a die supporting device shown in Fig. 6;
Fig. 8 is a sectional view taken along a line VIII-VIII corresponding to an entrance part of a passage of the die supporting device shown in Fig. 7;
Fig. 9 is a sectional view taken along a line IX-IX corresponding to a central part of a flowing direction of the passage of the die supporting device shown in Fig. 7; and
Fig. 10 is a sectional view taken along a line X-X corresponding to an exit part of the passage of the die supporting device shown in Fig. 7.

DETAILED DESCRIPTION OF THE PREFERRED EMBODIMENTS

Exemplary embodiments of the present invention will now be described with reference to the drawings.

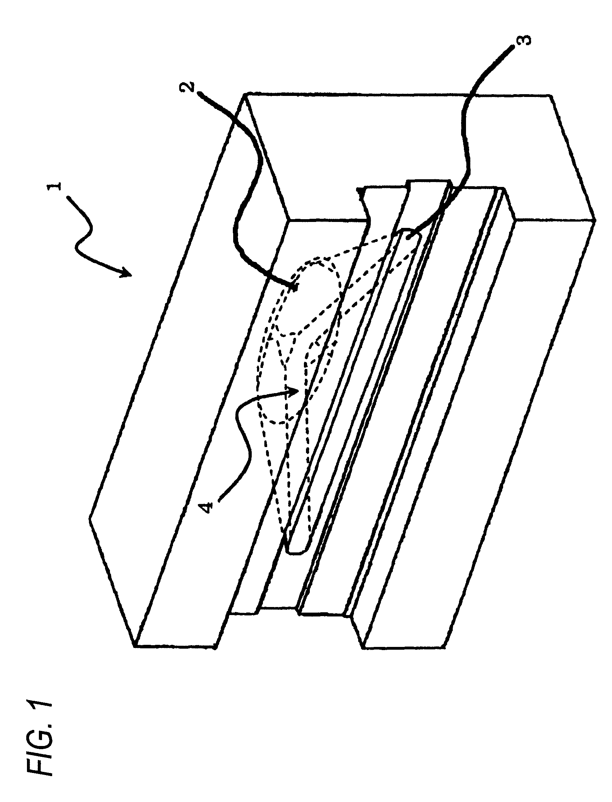

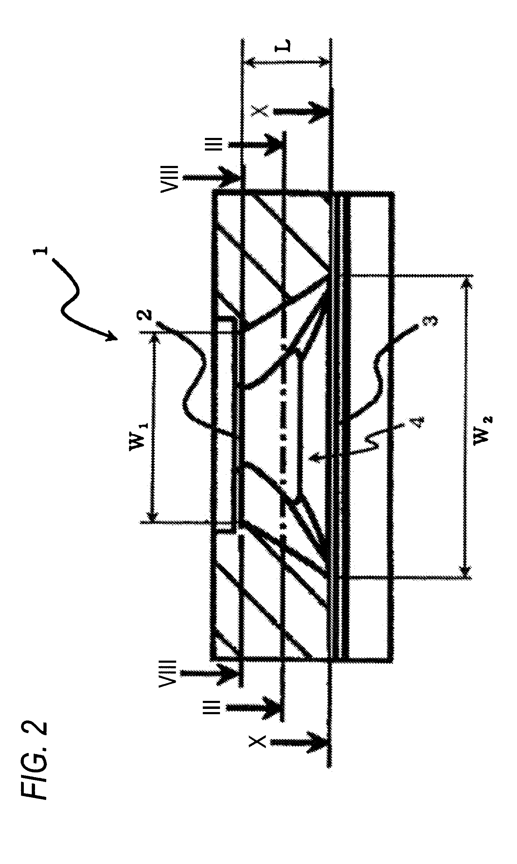

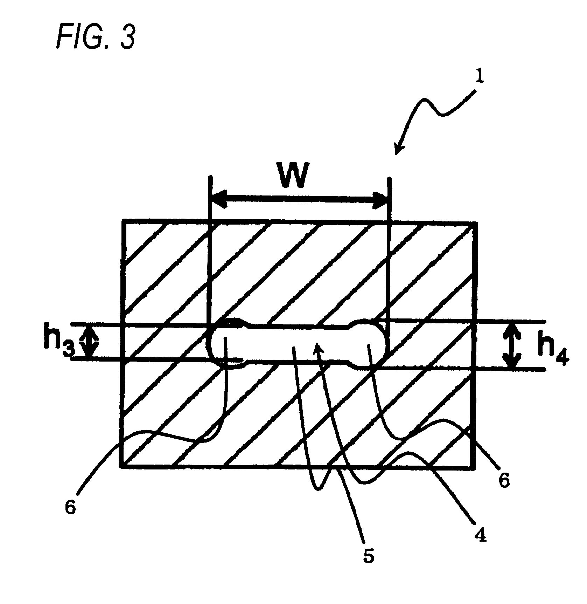

Fig. 1 shows a die supporting device according to one exemplary embodiment of the present invention and Fig. 2 shows a sectional view of a passage thereof. Fig. 3 shows a sectional view taken along a line III-III corresponding to a central part of a flowing direction of the passage of the die supporting device shown in Fig. 2.

As shown in Fig. 1, the die supporting device 1 according to the one exemplary embodiment of the present invention includes a passage 4 including an inlet port 2 and an outlet port 3. To the inlet port 2, a molten resin is supplied from an extruder. The molten resin supplied to the inlet port 2 is discharged from the output port 3, and then, discharged from a plurality of nozzle holes of a die plate attached to the die supporting device 1 to be formed in a shape of a strand. The outlet port 3 configures, together with the inlet port 2, a part of the passage 4 in which the width of the passage vertical to the flowing direction of the molten resin is enlarged from the inlet port 2 to the outlet port 3, and the height of the passage vertical to the flowing direction is reduced from the inlet port 2 to the outlet port 3.

As for the structure of the passage, the section of the passage of the inlet port 2 preferably has an elliptical shape having the width $W_1$ of the passage and the height $h_1$ of the passage shown in Fig. 8. The section of the passage of the outlet port 3 preferably has the elliptical shape having the width $W_2$ of the passage and the height $h_2$ of the passage shown in Fig. 10. Further, the passage 4 is configured so that outer edges in the direction of the width thereof are continuously and linearly expanded from the width $W_1$ to the width $W_2$ so as to be tapered from the inlet port 2 to the outlet port 3. Further, as shown in a sectional view corresponding to a central area of the flowing direction in Fig. 3, a section of the passage 4 between the inlet port 2 and the outlet port 3 is preferably formed with edge parts configured by two parallel straight lines in an area where a central part 5 in the direction of the width of the passage is connected to both end parts 6 and ends in the direction of the width of the passage are respectively preferably circular.

Further, the passage structure of the die supporting device 1 according to the one exemplary embodiment has a structure as described below. Namely, in the central part 5 in the direction of the width of the passage, the height of the passage is continuously reduced along the flowing direction from the height $h_1$ of the passage in the inlet port 2 shown in Fig. 8 to the height $h_3$ of the passage in the central area in the flowing direction shown in Fig. 3. The height of the passage tends to be continuously reduced to the outlet port 3 shown in Fig. 10. When the height of the passage in the outlet port 3 is $h_2$, the outlet port 3 shows a shape with a high aspect ratio.

On the other hand, also at both the end parts 6 in the direction of the width of the passage, the height of the passage is reduced along the flowing direction like that of the central part 5. Namely, the height of the passage is reduced from the height $h_1$ of the passage in the inlet port 2 shown in Fig. 8 to the height $h_4$ of the passage in the central area in the flowing direction shown in Fig. 3. Further, in the outlet port 3, the height $h_2$ of the passage is smaller than the height $h_4$ of the passage in the central area. However, in both the end parts 6, the height of the passage is not uniformly reduced along the flowing direction as in the central part 5, but circular hollow parts are formed along the flowing direction in such a way that the radiuses of the hollow parts are reduced. Especially, as for the size of the hollow parts, the height $h_4$ of the passage in the hollow parts formed at both the end parts 6 is larger than the height $h_3$ of the passage in the central part 5 in the direction of the width of the passage in the central area of the flowing direction shown in Fig. 3.

According to the structures of the die supporting device of the one exemplary embodiment of the present invention that has the above-described passage structure and a die for extrusion molding having the die supporting device, below-described effects are achieved. Namely, the die supporting device 1 includes the passage 4. In the passage 4, the width W of the passage vertical to the flowing direction of the molten resin is enlarged from the inlet port 2 to which the molten resin is supplied from the extruder to the outlet port 3 and the height h of the passage vertical to the flowing direction is reduced from the inlet port 2 to the outlet port 3. In a sectional structure between the inlet port 2 and the outlet port 3 of the passage 4, the height $h_4$ of the passage in both the end parts 6 in the direction of the width W of the passage is larger than the height $h_3$ of the passage in the central part 5 in the direction of the width W of the passage. A flow velocity in both the end parts 6 in the direction of the width W of the passage in this area is still lower than the flow velocity in the central part 5. However, since the height $h_4$ of the passage at both the end parts 6 is larger than the height $h_3$ of the passage in the central part 5, the sectional area of the passage is larger in both the end parts 6 than that in the central part 5. Thus, since the flow rate is proportional to the product of the flow velocity and the sectional area of the passage in accordance with a definition thereof, the difference of the flow rate between the central part 5 and both the end parts 6 can be suppressed more than that in a related-art passage configuration in which the sectional area of the passage in both end parts 106 is not enlarged. Therefore, the flow rate can be made to be uniform between the central part 5 and both the end parts 6 in the direction of the width W of the passage. Accordingly, in the die supporting device 1 located in the upstream side of the die plate, the flow rate in the direction of the width W of the passage can be previously made to be uniform.

Accordingly, the die supporting device and the die for extrusion molding having the die supporting device can be provided that can realize the uniformity of a flow rate in the direction of the width of the passage in a section of an exit part of the die located in the downstream side of the die supporting device.

[Example]

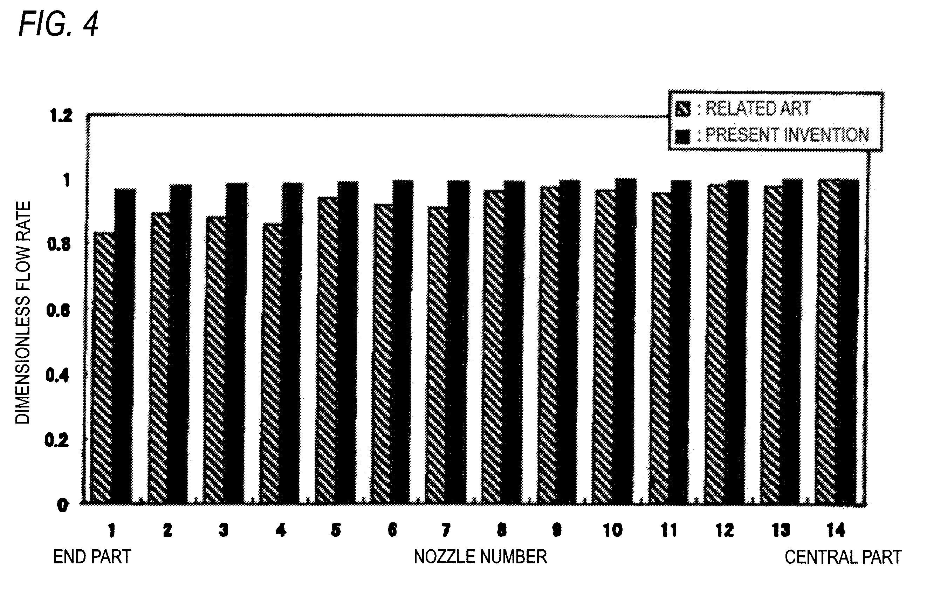

A scope of the present invention is not limited to an example described below in detail. Fig. 4 shows dimensionless flow rate distributions of nozzle holes of die plates respectively obtained when molten plastic is extruded by using a related-art die supporting device and the die supporting device according to the one exemplary embodiment of the present invention. As the die plates, a configuration where 27 holes are arranged in the direction of the width is used. As for the die supporting device, since the passage is symmetrical with respect to the direction of width as shown in Figs. 2 and 7, a result of the flow rate distribution from a hole at an end to a central hole is shown which corresponds to that of a half side of the passage. As for a strand die, devices except the die supporting device and forming conditions are the same. In the die supporting device, two kinds of passages including the passage of a related-art configuration and the passage according to the one exemplary embodiment of the present invention are used. In both configuration of the die supporting devices, the ratio of the width $W_1$ of the passage to the height $h_1$ of the passage in an inlet port has a relation expressed by $W_1/h_1 = 1.8$ and the ratio of the width $W_2$ of the passage to the height $h_2$ of the passage in an outlet port has a relation expressed by $W_2/h_2 = 20$. Further, the length L (see Fig. 2) of the passage showing a distance between the inlet port and the outlet port has a relation expressed by $L = 0.2W_2$. The ratio of the width $W_2$ of the passage in a section of an exit part to the width $W_1$ of the passage in a section of an entrance part has a relation expressed by $W_2/W_1 = 2.5$.

As understood from the result of Fig. 4, in both the related-art die and the die of the present invention, a flow velocity is lower in the end part than that in the central part. However, although in the related-art die, the flow velocity at an outermost end part is lower by 16.7% than the flow velocity of the central part, in the die according to the one exemplary embodiment of the present invention, the flow velocity at an outermost end part is lower by 3.2 % than the flow velocity of the central part. Accordingly, even when the width of the passage in the outlet port of the die supporting device is two times or more as large as the width of the passage in the inlet port, the die having the die supporting device according to the one exemplary embodiment of the present invention can more suppress the decrease of the flow rate in the end parts in the direction of the width than that of the related-art die.

The above-described values are not respectively specific dimensions and may be set to values used in the related-art device. Preferable ranges of the values are respectively expressed as described below.

$$1.3 \leq W_2/W_1 \leq 5.0$$

$$1.0 < W_1/h_1 \leq 2.2$$

$$10 \leq W_2/h_2 \leq 40$$

$$0.2 \leq L/W_2 \leq 1.5$$

**Claims**

1. A die supporting device (1), which is attachable to an end of an extruder, and which extrudes and molds a molten resin, the die supporting device comprising:

   a passage (4) comprising:

   an inlet port (2), to which the molten resin is supplied from the extruder; and
   an outlet port (3), from which the molten resin supplied from the inlet port is discharged,

   wherein a width (W) of the passage vertical to a flowing direction of the molten resin is enlarged from the inlet port to the outlet port, and a height (h) of the passage vertical to the flowing direction is reduced from the inlet port to the outlet port, and
   wherein in a sectional structure of the passage, a height (h4) of the passage in end parts (6) in a direction of the width of the passage is larger than a height (h3) of the passage in a central part (5) in the direction of the width of the passage.

2. The die supporting device according to claim 1, wherein a sectional shape of the passage at the inlet port is a circular or elliptical.

3. The die supporting device according to claim 1 or 2, wherein at least one section of the passage between the inlet port and the outlet port includes edge parts configured by two parallel straight lines in an area where the central is connected to the end parts (6), each of the end parts (6) in the direction of the width of the passage having a circular shape.

4. The die supporting device according to any one of claims 1 to 3,
   wherein the sectional shape of the passage in the outlet port is a circular or elliptical.

5. The die supporting device according to any one of claims 1 to 4,
wherein a relation between a width $W_1$ of the passage in the inlet port and a width $W_2$ of the passage in the outlet port is expressed by $1.3 \leq W_2/W_1 \leq 5.0$.

6. The die supporting device according to any one of claims 1 to 5,
wherein a relation between the width $W_1$ of the passage in the inlet port and a height $h_1$ of the passage in the inlet port is expressed by $1.0 < W_1/h_1 \leq 2.2$.

7. The die supporting device according to any one of claims 1 to 6,
wherein a relation between the width $W_2$ of the passage in the outlet port and a height $h_2$ of the passage in the outlet port is expressed by $10 \leq W_2/h_2 \leq 40$.

8. The die supporting device according to any one of claims 1 to 7,
wherein when a distance between the inlet port and the outlet port is defined as a length L of the passage, a relation between the length L of the passage and the width $W_2$ of the passage in the outlet port is expressed by $0.2 \leq L/W_2 \leq 1.5$.

9. A die for extrusion molding comprising:

the die supporting device according to any one of claims 1 to 8; and
a die plate (108) having nozzle holes (107) that discharge the molten resin discharged from the die supporting device in a form of a strand.

*FIG. 1*

*FIG. 2*

FIG. 3

FIG. 4

FIG. 5

*FIG. 6*

101

104

102

103

EP 2 251 177 A2

FIG. 7

EP 2 251 177 A2

*FIG. 8*

*FIG. 9*

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004268274 A

- JP 2006001015 A